# EUROPÄISCHE PATENTSCHRIFT

(11) **EP 1 642 040 B1**
(45) Veröffentlichungstag und Bekanntmachung des Hinweises auf die Patenterteilung: **11.02.2009**
(21) Anmeldenummer: 04728109.2
(22) Anmeldetag: 17.04.2004
(51) Int. Cl.: F16F 15/02, F16F 13/28, F16F 13/26, F16F 13/00, B60G 7/00, F16F 13/14, B62D 21/11

(54) **VERFAHREN ZUR SCHWINGUNGSDÄMPFUNG AN EINEM FAHRWERKSLAGER FÜR KRAFTFAHRZEUGE**
METHOD FOR DAMPING VIBRATIONS AT A VEHICLE CHASSIS BEARING
PROCÉDÉ POUR AMORTIR LES VIBRATIONS AU PALIER DE SUPPORT DU CHÂSSIS DE VOITURE

(30) Priorität: 27.06.2003 DE 10329037
(43) Veröffentlichungstag der Anmeldung: 05.04.2006
(60) Teilanmeldung: 08012560.2
(73) Patentinhaber: AUDI AG, 85045 Ingolstadt (DE)
(72) Erfinder: CONRAD, Thomas, 91757 Treuchtlingen (DE); UNGER, Wolfgang, 85080 Gaimersheim (DE); WENGER, Josef, 86529 Schrobenhausen (DE); HUDLER, Roland, 85077 Manching (DE); LAMERS, Stephan, 93336 Altmannstein (DE); MÜLLER, Matthias, 85101 Lenting (DE)
(74) Vertreter: Asch, Konrad
(86) Internationale Anmeldenummer: PCT/EP2004/004095
(87) Internationale Veröffentlichungsnummer: WO 2005/001308

(56) Entgegenhaltungen:
- DE-A- 3 529 178
- US-A- 4 687 223
- US-A- 4 858 899
- US-A- 5 259 600
- US-A- 5 816 587
- US-A1- 2003 034 624
- PATENT ABSTRACTS OF JAPAN Bd. 0170, Nr. 12 (M-1351), 11. Januar 1993 (1993-01-11) & JP 4 243613 A (MITSUBISHI MOTORS CORP), 31. August 1992 (1992-08-31)
- PATENT ABSTRACTS OF JAPAN Bd. 0124, Nr. 45 (M-767), 22. November 1988 (1988-11-22) & JP 63 176843 A (TOKAI RUBBER IND LTD), 21. Juli 1988 (1988-07-21)
- PATENT ABSTRACTS OF JAPAN Bd. 0093, Nr. 03 (M-434), 30. November 1985 (1985-11-30) & JP 60 139508 A (NISSAN JIDOSHA KK), 24. Juli 1985 (1985-07-24)
- PATENT ABSTRACTS OF JAPAN Bd. 0102, Nr. 11 (M-501), 24. Juli 1986 (1986-07-24) & JP 61 050810 A (MAZDA MOTOR CORP), 13. März 1986 (1986-03-13)

## Beschreibung

Die Erfindung betrifft ein Verfahren zur Schwingungsdämpfung an einem Fahrwerkslager für Kraftfahrzeuge nach dem Oberbegriff des Anspruchs 1; siehe zum Beispiel JP-A-04243613.

Fahrwerklager für Kraftfahrzeuge sind in der Regel Gummi-Metall-Hülsenlager mit definierter Kennung hinsichtlich deren Steifigkeit und Dämpfungseigenschaften, wobei die gewählte Kennung zumeist einen Kompromiss zwischen Fahrkomfort, Schwingungsisolation und dynamischer Steifigkeit darstellt. Auch zusätzlich hydraulisch gedämpfte Fahrwerklager sind bekannt, die den gestellten Anforderungen an Fahrkomfort, Geräuschisolierung, etc. noch verbessert Rechnung tragen.

Durch die DE 101 17 305 ist ferner ein Verfahren beschrieben, bei dem zur Verminderung der Schallübertragung ein Schwingungssensor die störenden, von der Fahrbahn angeregten Schwingungen erfasst. Eine Vorrichtung zur Frequenzanalyse ermittelt die stärksten harmonischen Anregungen. Mindestens ein Fehlersensor misst die Restschwingungen, die über das Fahrwerkslager noch auf den Wagenkasten übertragen werden. Diese Restschwingungen werden durch Überlagerung von Gegenschwingungen eines Aktuators, insbesondere eines Piezoaktuators, minimiert.

Aus der oben genannten JP-A-04243613 ist weiter ein Verfahren zur Schwingungsdämpfung an Fahrwerkslagern von Kraftfahrzeugen bekannt, wobei der Fahrzustand des Kraftfahrzeuges und die Fahrbahnbeschaffenheit über Sensoren erfasst werden und wobei das zumindest eine Fahrwerkslager zur Veränderung dessen Steifigkeit und/oder Dämpfung abhängig von den erfassten Parametern auf verschiedene Kennlinien verändert wird.

Aufgabe der Erfindung ist es, ein Verfahren aufzuzeigen, mit dem über einen weiten Frequenzbereich eine hervorragende Schwingungsdämpfung und Schwingungs- sowie Geräuschisolation unter Berücksichtigung von bei Kraftfahrzeugen auftretenden Fahrzuständen und Fahrbahnverhältnissen erzielbar ist.

Die vorstehende Aufgabe wird mit den kennzeichnenden Merkmalen des Patentanspruches 1 gelöst. Vorteilhafte Weiterbildungen des Verfahrens beschreiben die Patentansprüche 2 bis 5.

Gemäß Anspruch 1 wird vorgeschlagen, dass der Fahrzustand des Kraftfahrzeuges und/oder die Fahrbahnbeschaffenheit über Sensoren erfasst wird und dass das zumindest eine Fahrwerkslager zur Veränderung dessen Steifigkeit und/oder Dämpfung abhängig von den erfassten Parametern auf verschiedene Kennlinien verändert wird. Dementsprechend werden die Fahrbahnanregungen erfasst, signaltechnisch verarbeitet und das Fahrwerklager durch entsprechende Auswertung der Frequenzspektren auf die von den vorgegebenen Kennlinien am besten geeigneten Kennlinien eingestellt. Erfindungsgemäß wird vorgeschlagen, bei an der Vorderachse des Kraftfahrzeuges erfasster, unregelmäßiger Stoßanregung eine schnelle Änderung der Kennlinie (Verminderung deren dynamischer Steifigkeit) zumindest eines Fahrwerklagers an der Hinterachse zu steuern, wodurch eine deutlich spürbare Verbesserung des Fahrkomforts des Kraftfahrzeuges erzielbar ist.

Das Fahrwerklager kann bevorzugt auf unterschiedliche Kennlinien umgeschaltet werden, z.B. durch Aktivierung oder Deaktivierung von Drosselelementen in hydraulischen Dämpfungseinrichtungen der Fahrwerkslager und/oder durch Zuschaltung von Zusatzfedern zur Erhöhung der dynamischen Steifigkeit.

Alternativ oder zusätzlich können dem Fahrwerklager abhängig von der Fahrbahnbeschaffenheit eine Gegenschwingung überlagert werden, um beispielsweise hochfrequente Schwingungsanteile zu löschen bzw. entsprechende Störgeräusche zu eliminieren.

In vorteilhafter Weiterbildung des Verfahrens wird vorgeschlagen, dass bei definierten Fahrzuständen des Kraftfahrzeuges eine die Fahrsicherheit erhöhende Einstellung der Fahrwerklager bevorrangt wird. Dies kann z.B. der Fall sein bei einer starken Abbremsung des Kraftfahrzeuges oder bei hohen Kurvengeschwindigkeiten; hier ist eine "härtere Kennung" der Fahrwerklager aus Fahrsicherheitsgründen vorzuziehen. Die entsprechenden Fahrzustände können über Signale von Radsensoren, Bremslichtschalter, etc. abgeleitet werden, wobei ggf. die Signale von im Kraftfahrzeug bereits vorhandenen Einrichtungen wie ABS, ESP, etc. mit verwertet werden können.

Bei mehreren Fahrwerklagern mit Überlagerung einer Gegenschwingung wird ferner vorgeschlagen, dass die Fahrwerklager getrennt und abhängig von deren spezifischer Schwingungsanregung von der Fahrbahn getrennt angesteuert werden. Dies erlaubt eine noch feinfühligere und noch spezifischer auf die auftretenden Fahrzustände abstimmbare Regelung der Kennlinien der Fahrwerkslager; z.B. können beim Durchfahren von Kurven die kurvenäußeren Fahrwerkslager "härter" als die kurveninneren eingestellt werden.

Besonders vorteilhaft kann weiterhin über Weg- und/oder Beschleunigungssensoren die Fahrbahnbeschaffenheit an der Vorderachse des Kraftfahrzeuges erfasst werden, dann die entsprechenden Signale in einem Steuergerät verarbeitet werden und schließlich die Fahrwerkslager über Leistungsverstärker elektrisch, elektromagnetisch und/oder über Piezoelemente beaufschlagt werden. Bei entsprechender Echtzeitverarbeitung können somit die an der Vorderachse erfassten Stoßanregungen durch eine entsprechend schnelle Kennlinienanpassung der Fahrwerkslager wirkungsvoll gedämpft und eliminiert werden.

Eine besonders vorteilhafte Vorrichtung zur Durchführung des Verfahrens weist Sensoren zur Fahrzustandserfassung des Kraftfahrzeuges und zur Fahrbahnbeschaffenheit auf und wirkt mit einem elektronischen Steuergerät zur Verarbeitung der erfassten Signale und zur Auswahl verschiedener steuerbarer Kennlinien zusammen, welches Steuergerät zumindest ein in seiner Steifigkeit und/oder Dämpfung (Verlustwinkel) veränderbares Fahrwerkslager ansteuert. Das Fahrwerkslager kann bevorzugt zumindest ein elastisches Lager eines Hilfsrahmens (auch Fahrschemel oder Achsträger genannt) sein.

Bevorzugt kann das Fahrwerkslager in vier verschiedene Kennlinien von kleiner Steifigkeit und kleiner Dämpfung in große Steifigkeit und große Dämpfung umschaltbar sein. Damit sind bei noch vertretbarem konstruktiven Aufwand den zumeist auftretenden Fahrzuständen und Fahrbahnverhältnissen Rechnung tragende Kennlinienanpassungen gegeben, die einen weiten Frequenzbereich der Schwingungsanregungen abdecken.

Baulich besonders vorteilhaft kann das Fahrwerkslager eine Außenhülse und eine Innenhülse aufweisen, zwischen denen gummielastische Dämpfungsmittel vorgesehen sind, wobei zwischen den Dämpfungsmitteln die dynamische Steifigkeit und die Dämpfungswirkung des Fahrwerkslagers durch Umschaltmittel verändernde, hydraulisch wirkende Arbeitskammern gebildet sind.

Dabei können die einen Arbeitskammern in axialer Richtung und die anderen Arbeitskammern in radialer Richtung wirken und es können beide Arbeitskammern über durch die Umschaltmittel veränderbare Drosselelemente in zwei Dämpfungs-Wirkstellungen umschaltbar sein. Damit wirkt das Fahrwerkslager bei entsprechender Einbauanordnung in der Hochrichtung (Z-Richtung), sowie in Längsrichtung (X-Richtung) und Querrichtung (Y-Richtung) des Kraftfahrzeuges bei entsprechender Schwingungsanregung.

Die Umschaltmittel können bevorzugt elektromagnetisch betätigbare Schieber sein, die die besagten Verbindungen auf- oder zusteuern. Dabei kann die konstruktive Auslegung so sein, dass die jeweils "harte" Kennlinie (sportliche Auslegung) im stromlosen Zustand der Schieber (z.B. federbeaufschlagt) gegeben ist, um bei Ausfall des Systems die Fahrsicherheit des Kraftfahrzeuges in fahrdynamischen Grenzfällen sicherzustellen, während die den Fahrkomfort erhöhenden, "weicheren" Lagerkennungen durch entsprechende elektromagnetische Betätigung über das Steuergerät gesteuert sind.

Alternativ oder zusätzlich kann einer der hydraulischen Arbeitskammern des Fahrwerkslagers eine über einen Aktuator betätigbare Membrane zur Erzeugung von Gegenschwingungen benachbart sein. Damit gelingt vorteilhaft eine akustische Abkopplung störender Geräusche, die bei hochfrequenter Schwingungsanregung ggf. über das Fahrwerkslager in die Karosserie des Kraftfahrzeuges als Körperschall (Brummgeräusche) eingeleitet werden würden.

Die Membrane kann bevorzugt mittels eines elektrisch ansteuerbaren Piezoelementes in Gegenschwingung versetzbar sein. Mit derartigen, an sich bekannten Piezoelementen können hohe Stellkräfte und schnelle Schaltzeiten realisiert werden.

Das Piezoelement kann dabei vorteilhaft einen am Gehäuse des Fahrwerkslagers angelenkten Hebel betätigen, der den geringen Hub des Piezoelementes in einen größeren Membranhub umsetzt.

Insbesondere bei der Anwendung des Fahrwerkslagers als Hilfsrahmenlager kann das Piezoelement seitlich des Fahrwerkslagers angebaut sein, wobei die Membrane bzw. die Gegenschwingungen in Hochrichtung (Z-Richtung) des Kraftfahrzeuges wirken.

Alternativ zu einem Piezoelement kann die Membrane mittels eines elektrodynamischen Stellantriebs mit einer stromdurchflossenen Tauchspule und einem Permanentmagnet betätigt sein.

Baulich besonders günstig kann dabei der Permanentmagnet fest mit dem Lagerkern des Fahrwerkslagers verbunden sein und die Tauchspule frei schwingend mit der Membrane zur Erzeugung der Gegenschwingungen zusammenwirken.

In weiterer Ausgestaltung kann dem hydraulisch gedämpften Fahrwerkslager eine Zusatzfeder mittels eines Aktuators zuschaltbar sein. Damit kann die Steifigkeit des Fahrwerkslagers in noch größerem Maße verändert und an die auftretenden Belastungen angepasst werden.

Die Zusatzfeder kann bevorzugt über eine Lamellenkupplung zuschaltbar sein, wobei die Betätigung der Lamellenkupplung wiederum über ein elektrisch ansteuerbares Piezoelement erfolgen kann.

Ferner ist die Lamellenkupplung bevorzugt auf dem Lagerkern des Fahrwerkslager angeordnet und weist in einer Richtung quer zu diesem einen Freiheitsgrad auf. Das heißt, dass die Lamellenkupplung in einer Belastungsrichtung auch in geschlossenem Zustand nicht wirkt, wodurch das Fahrwerkslager noch besser an gegebene Belastungen anpassbar ist bzw. die Zusatzfeder gezielt belastbar einsetzt werden kann.

Die gummielastische Zusatzfeder kann konstruktiv besonders einfach aus zwei diametral gegenüber liegenden Lagerkörpern bestehen, die über die Kupplungslamellen mit dem Lagerkern kuppelbar sind, wobei die Kupplungslamellen mittels des Piezoelementes lösbar oder zusammenpressbar sind.

Insbesondere bei einem Einsatz als Hilfsrahmenlager kann die Zusatzfeder in Hochrichtung (Z-Richtung) und Längsrichtung (X-Richtung) des Kraftfahrzeuges wirken und der Freiheitsgrad der Lamellenkupplung in der Querrichtung (Y-Richtung) liegen.

Schließlich kann zur Erzielung kurzer Ansprechzeiten das elektrische Piezoelement quer zur Lagermittelachse des Fahrwerkslagers angeordnet sein und über eine Druckplatte und eine Vorspannfeder auf die Lamellenkupplung wirken.

Die Erfindung wird im Folgenden mit weiteren Einzelheiten näher beschrieben.

Es zeigen:
**Fig. 1** eine Draufsicht auf ein Fahrwerk eines Kraftfahrzeuges mit einem vorderen und hinteren Hilfsrahmen und schwingungsdämpfenden Fahrwerkslagern bzw. Hilfsrahmenlager, deren Kennlinien über ein elektronisches Steuergerät veränderbar sind;
**Fig. 2** ein erstes Fahrwerkslager mit in axialer und radialer Richtung wirksamer, hydraulischer Dämpfungseinrichtung mit Umschaltung der Kennlinien in der dynamischen Steifigkeit und der Dämpfung (Verlustwinkel), in einem Längsschnitt;
**Fig. 3** das Fahrwerkslager nach Fig. 2 in einer Ansicht gemäß Linie III - III der Fig. 2;
**Fig. 4** das Fahrwerkslager nach Fig. 2 in einem Querschnitt gemäß Linie IV - IV der Fig. 2;
**Fig. 5a** **und b** die umschaltbaren Kennlinien 1 bis 4 der Dämpfung (Verlustwinkel) und dynamischen Steifigkeit des Fahrwerkslagers nach den Fig. 2 bis 4;
**Fig. 6** ein Ersatzschaltbild des Fahrwerkslagers nach den Fig. 2 bis 4;
**Fig. 7** eine Draufsicht auf ein weiteres Fahrwerkslager mit einem elektrischen Piezoelement als Aktuator zur Überlagerung von Gegenschwingungen;
**Fig. 8** einen Längsschnitt entlang der Linie VIII - VIII der Fig. 7 durch das Fahrwerkslager;
**Fig. 9** ein Ersatzschaltbild des Fahrwerkslagers nach den Fig. 7 und 8;
**Fig. 10** einen Längsschnitt durch ein drittes Fahrwerkslager mit einem elektrodynamischen Antrieb zur Erzeugung von Gegenschwingungen;
**Fig. 11** einen Querschnitt entlang der Linie XI - XI durch das Fahrwerkslager gemäß Fig. 10;
**Fig. 12** einen Längsschnitt durch eine viertes Fahrwerkslager mit über eine Lamellenkupplung zuschaltbarer Zusatzfeder;
**Fig. 13** einen Querschnitt gemäß Linie XIII - XIII der Fig. 12 durch das Fahrwerkslager;
**Fig. 14** ein Ersatzschaltbild des Fahrwerkslagers nach den Fig. 12 und 13;
**Fig. 15** ein Blockschaltbild der Kennlinienumschaltung des Fahrwerkslagers nach den Fig. 1 bis 6 über ein elektronisches Steuergerät; und
**Fig. 16** ein weiteres Blockschaltbild eines weiteren elektronischen Steuergerätes zur Kennlinienumschaltung mit Rückkopplungssteuerung des Fahrwerkslagers nach den Fig. 7 bis 11.

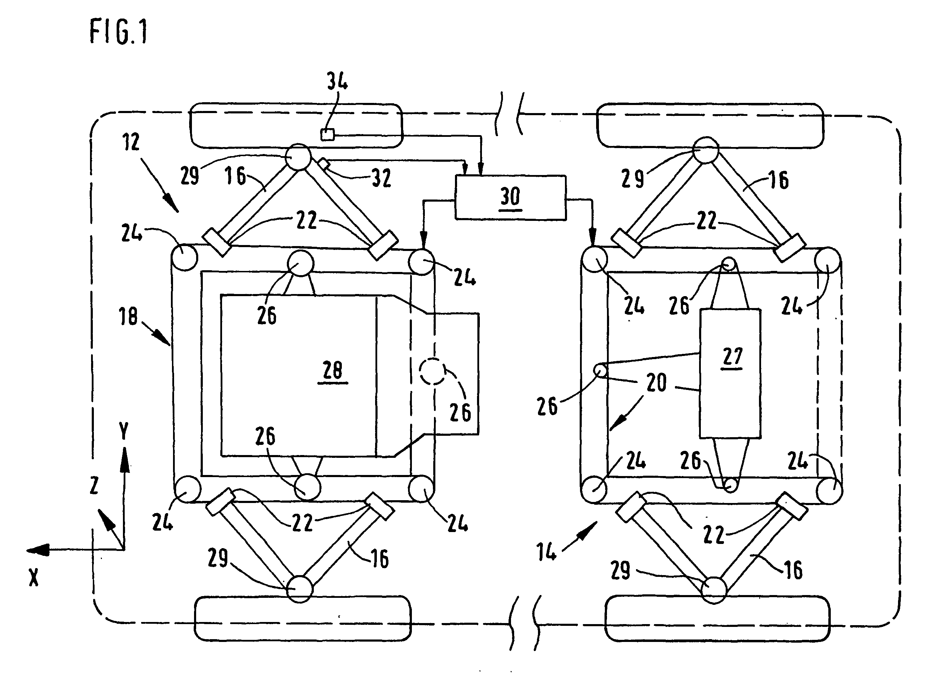

In der **Fig. 1** ist grob schematisch eine Draufsicht eines Kraftfahrzeuges dargestellt, mit einer Vorderachse 12 und einer Hinterachse 14. Die nicht mit Bezugszeichen versehenen Räder des Kraftfahrzeuges sind über unabhängige Radaufhängungen (im Detail nicht beschrieben) mit der Karosserie des Kraftfahrzeuges in bekannter Weise verbunden.

Dabei sind untere Querlenker (allgemein mit 16 bezeichnet) an einem vorderen und einem hinteren Hilfsrahmen 18, 20 über Fahrwerkslager (allgemein mit 22 bezeichnet) befestigt. Die Räder sind mittels Fahrwerkslager 29 mit den Querlenkern 16 verbunden. Die schwingungsdämpfenden Fahrwerkslager 22 und 29 in den Querlenkern 16 (untere Lenker (Trag- und Führungslenker) und obere Lenker) lassen bedingt eine kardanische Bewegung zu, sind aber nicht generell schwenkbar gelagert. Die Lenkung des Rades kann über eine Spurstange und Radträger erfolgen (hier nicht mit dargestellt).

Ferner sind die Hilfsrahmen 18, 20 über Fahrwerkslager bzw. Hilfsrahmenlager (allgemein mit 24 bezeichnet) mit der Karosserie des Kraftfahrzeuges schwingungsisoliert verbunden.

Der vordere Hilfsrahmen 18 trägt zudem über schwingungsisolierende Aggregatlager 26 das aus Brennkraftmaschine und Geschwindigkeits-Wechselgetriebe bestehende Antriebsaggregat 28. Der hintere Hilfsrahmen 20 kann bei einem allradgetriebenen Kraftfahrzeug zudem ein Hinterachsdifferential 27 über schwingungsisolierende Aggregatelager 26 tragen.

Die in verschiedenen Kennlinien umschaltbaren Fahrwerkslager 24 (es könnten aber auch die Fahrwerkslager 22 und/oder die Fahrwerkslager 29 und/oder die Aggregatelager 26 sein) werden über ein elektronisches Steuergerät 30 angesteuert, das über elektrische Leitungen mit z. B. Weg-Beschleunigungssensoren 32 (vgl. anhand des rechten Vorderrades des Kraftfahrzeuges) an den Querlenkern 16 und mit z. B. Drehzahlsensoren 34 an den Rädern des Kraftfahrzeuges verbunden ist. Die besagten Sensoren 32, 34 können im Kraftfahrzeug bereits vorhandene Sensoren anderer elektronischer Regelsysteme sein. Die Signalverarbeitung und weitere Eingabeparameter des Steuergerätes 30 sind im nachfolgenden noch näher beschrieben.

Die auf die Fahrwerkslager 24 einwirkenden Schwingungsanregungen treten in der Hochachse bzw. in Z-Richtung, in der Längsachse bzw. in X-Richtung und abhängig vom Anwendungsfall in der Querrichtung des Kraftfahrzeuges bzw. in Y-Richtung auf (vgl. die eingezeichneten Richtungspfeile).

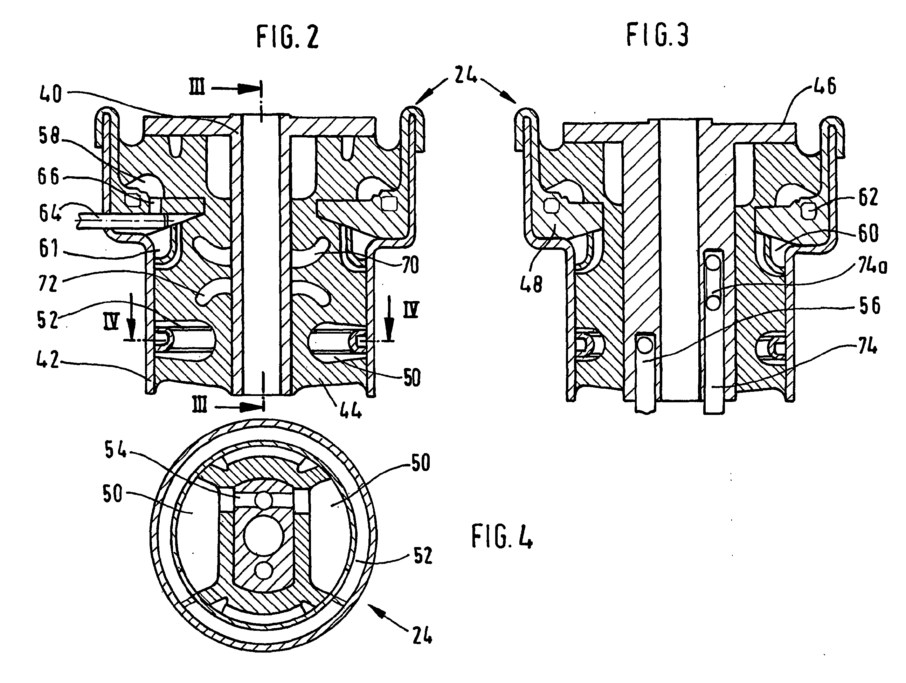

Mit Bezug zu den **Fig. 2 bis 4** ist eines der Fahrwerkslager 24 beschrieben, die anderen Fahrwerkslager 24 können identisch ausgebildet und ebenfalls entsprechend von dem Steuergerät 30 parallel oder individuell angesteuert sein.

Das Fahrwerkslager 24 setzt sich im wesentlichen zusammen aus einer im Querschnitt etwa rechteckigen Innenhülse 40, einer rotationssymmetrischen Außenhülse 42 und einem dazwischen liegenden Tragkörper 44 aus gummielastischem Material. In der Einbauanordnung liegt die Mittelachse der Innenhülse 40 in der besagten Z-Richtung.

Ferner ist an der Innenhülse 40 eine Anschlagtasse 46 befestigt, die einer mit der Außenhülse 42 fest verbundenen, radial nach innen ragenden Zwischenwand 48 gegenüber liegt.

In dem Tragkörper 44 sind zwei mit Hydrauliköl befüllte Arbeitskammern 50 als erste hydraulische Dämpfungseinheit ausgebildet, die sich diametral in X-Richtung gegenüberliegen und die über einen ringförmigen Drosselkanal 52 als erstes Drosselelement und über einen Kurzschlusskanal 54 als zweites, einen geringeren Strömungswiderstand aufweisendes Drosselelement miteinander über entsprechende Durchtrittsöffnungen verbunden sind (vgl. **Fig. 4****).** Der Kurzschlusskanal 54 ist mittels eines ersten Schiebers 56 auf- oder zusteuerbar, wobei dadurch zwei verschiedene Kennlinien in X-Richtung einstellbar sind.

Ferner sind in dem Tragkörper 44 zwei ringförmige Arbeitskammern 58, 60 als zweite hydraulische Dämpfungseinheit zwischen der Anschlagtasse 46 und beiderseits der Zwischenwand 48 angeordnet, die in Z-Richtung ebenfalls schwingungsdämpfend wirken. Dabei ist wiederum als erstes Drosselelement ein die beiden Arbeitskammern 58, 60 verbindender Ringkanal 62 und ein mittels eines zweiten Schiebers 64 auf- oder zusteuerbarer Kurzschlusskanal 66 vorgesehen, über den zwei weitere unterschiedliche Kennlinien des Fahrwerkslagers 24 in Z-Richtung einstellbar sind.

Schließlich sind in dem Tragkörper 44 vier weitere Arbeitskammern 70, 72 vorgesehen, die sich wie die Arbeitskammern 50 diametral gegenüber liegen, die wie die vorstehend beschriebenen Arbeitskammern 50 bzw. 58, 60 mit Hydrauliköl befüllt sind und die mittels eines dritten Schiebers 74 mit Durchtrittsöffnungen 74a entweder miteinander verbindbar oder voneinander trennbar sind. Bei getrennter Verbindung der beiden Arbeitskammern 70, 72 bilden diese aufgrund der Inkompressibilität des Hydrauliköls eine zunehmende Versteifung des Tragkörpers 44 in Z-Richtung des Fahrwerkslagers 24.

Das Fahrwerkslager 24 beinhaltet somit eine axial dämpfende Einheit (Arbeitskammern 58, 60) und eine radial dämpfende Einheit (Arbeitskammern 50). Bei Einfederung bzw. Schwingungsanregung in X-Richtung wird der Druckausgleich zwischen den zwei gegenüberliegenden Arbeitskammern 50 über die Flüssigkeitsströmung über den fest mit der Außenhülse 42 verbundenen, ringförmigen Drosselkanal 52 realisiert. Der Drosselkanal 52 ist auf einen maximalen Verlustwinkel (z.B. > 40 Grad) für den spürbaren Frequenzbereich von z.B. 13 Hz abgestimmt.

Bei geöffnetem Schieber 56 erfolgt der Volumenausgleich über den Kurzschlusskanal 54, wodurch die Dämpfung in X-Richtung deutlich reduziert wird.

Bei einer Auslenkung des Fahrwerkslagers 24 in Z-Richtung wird das Hydrauliköl von der Arbeitskammer 58 über den ringförmigen Drosselkanal 66 in die von einer Blähfeder 61 geringer Steifigkeit begrenzte Arbeitskammer 60 verdrängt und umgekehrt. Zur Verminderung der hydraulischen Dämpfung kann durch Aufsteuern des Kurzschlusskanales 62 über den Schieber 64 eine "weichere" Kennlinie geschaltet werden.

Die zuschaltbare Steifigkeit des Fahrwerklagers 24 in Z- und X-Richtung wird über die Arbeitskammern 70, 72 gesteuert, die in der einen Stellung des Schiebers 74 über Ausgleichsbohrungen 74a im Schieber 74 miteinander verbunden sind (entspricht einer "weichen" Kennung). Bei verschlossenen Ausgleichsbohrungen 74a ist das Fahrwerkslager 24 in X- und Y-Richtung verhärtet bzw. weist eine veränderte Kennlinie auf. Die Zusatzsteifigkeit kann so ausgelegt sein, dass im geschalteten Zustand die Steifigkeit doppelt so groß ist wie die Ausgangssteifigkeit des Fahrwerkslagers bei geöffneten Ausgleichsbohrungen 74a.

Das Betätigen der Schieber 56, 64, 74 kann z. B. über Elektromagnete (nicht dargestellt) bewerkstelligt werden, die von dem elektronischen Steuergerät 30 entsprechend angesteuert werden. Die Rückstellung in die jeweils "härtere" Kennlinie erfolgt z. B. durch Federkraft, so dass der Ansteuerstrom in einfacher Weise nur zu- oder abgeschaltet werden muss und bei Betriebsstörungen die jeweils "härteren" Kennlinien des Fahrwerkslagers 24 latent vorliegen.

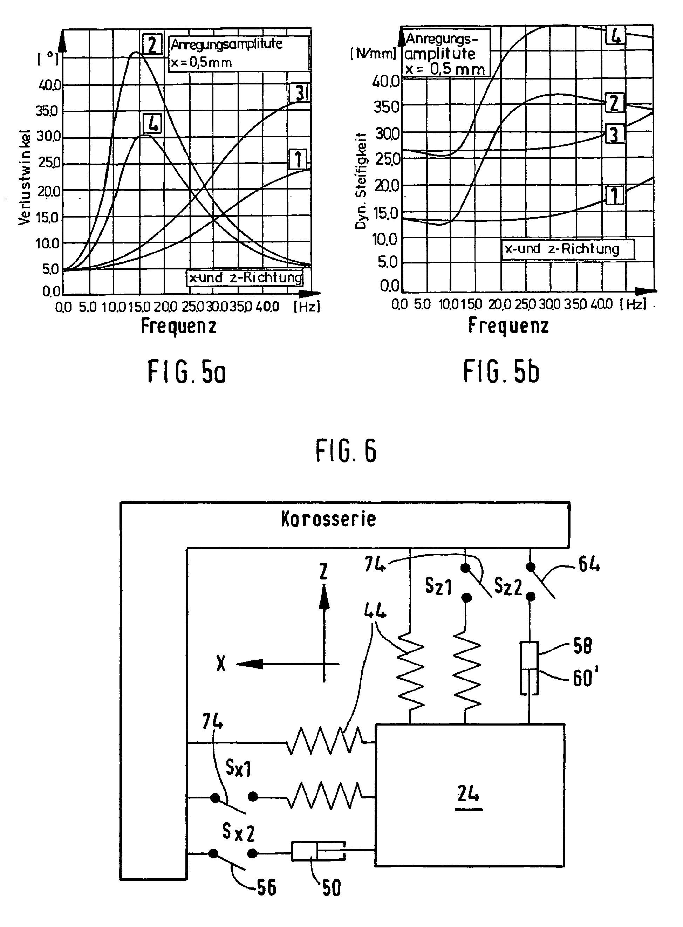

Die **Fig. 5a** **und b** zeigen die umschaltbaren Kennlinien 1 bis 4 des Fahrwerkslagers, die wie folgt klassifiziert sind:
Kennung 1 = Kleine Steifigkeit mit kleiner Dämpfung
Kennung 2 = Kleine Steifigkeit mit großer Dämpfung
Kennung 3 = Große Steifigkeit mit kleiner Dämpfung
Kennung 4 = Große Steifigkeit mit großer Dämpfung

Wie aus den beispielsweise erstellten Kennlinien 1 bis 4 ersichtlich ist, lassen sich durch entsprechende Betätigung der Schieber 56, 64 und 74 die entsprechenden Kennlinien und damit verbunden eine wirkungsvolle Schwingungsdämpfung und Geräuschisolation verwirklichen.

Es sei schließlich noch auf **Fig. 6** verwiesen, die ein Ersatzschaltbild des Fahrwerkslagers 24 darstellt. Die besagten Schieber 56, 64 und 74 sind dabei als Schalter dargestellt; ferner sind der funktionell als Feder wirkende Tragkörper 44 und die Dämpfungseinrichtungen in Form der besagten Arbeitskammern mit den gleichen Bezugszeichen versehen.

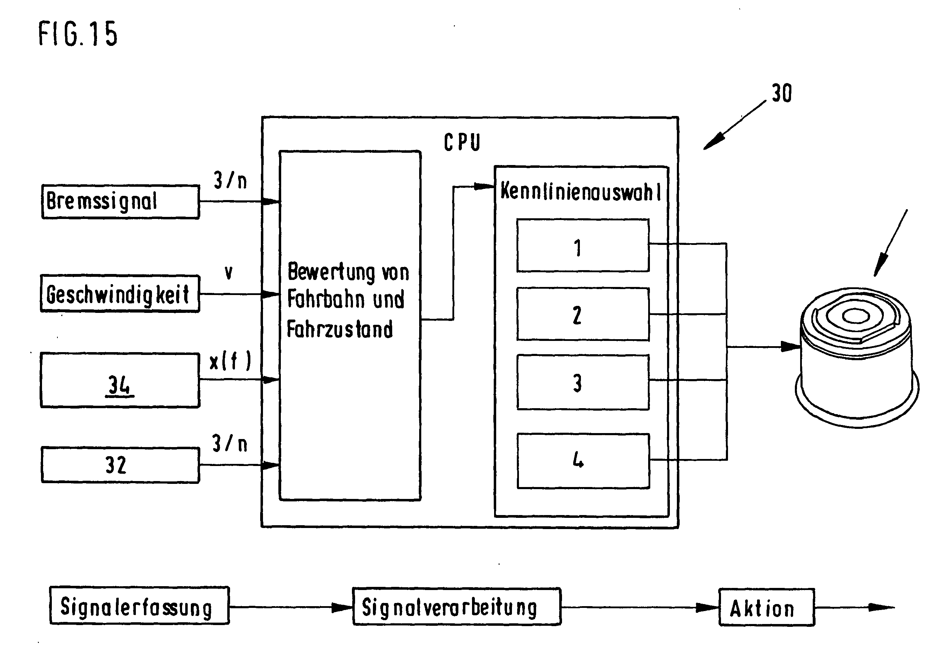

In der **Fig. 15** ist die Signalerfassung, die Signalverarbeitung in dem Steuergerät 30 und die Aktion bzw. die Umschaltung auf die verschiedenen Kennlinien 1 bis 4 dargestellt:

Dementsprechend werden dem Steuergerät 30 die Signale der Wegsensoren 32 an den Querlenkern 16, die Signale der Drehzahlsensoren 34 an den Rädern des Kraftfahrzeuges, ein Geschwindigkeitssignal und ein Bremssignal zugeführt und durch entsprechende signaltechnische Auswertung der Fahrzustand des Kraftfahrzeuges und die Fahrbahnbeschaffenheit ermittelt.

Aus diesen Daten erfolgt eine Kennlinienauswahl für das Fahrwerkslager 24 bzw. für individuelle oder alle Fahrwerkslager 24 (vgl. **Fig.1**).

Über Leistungsverstärker werden dann die entsprechenden Schieber 56, 64, 72 angesteuert und die ausgewählte Kennlinie 1, 2, 3 oder 4 eingestellt.

Darüber hinaus kann beispielsweise bei Überfahren eines Einzelhindernisses auf der Fahrbahn über den Wegsensor 32 an der Vorderachse 12 des Kraftfahrzeuges in Echtzeitsteuerung die Kennlinie der Fahrwerkslager 24 an der Hinterachse 14 z. B. auf kleine Steifigkeit und große Dämpfung (= Kennlinie 2) umgeschaltet werden. Damit wird einem sogenannten "Achsprellen" beim Überfahren des Hindernisses an der Hinterachse 14 entgegengewirkt und der Fahrkomfort erhöht. ("Achsprellen" = Beim Überfahren eines Hindernisses (z. B. Kanaldeckel, Bordstein, Kante) kann eine Achse schwingen).

Auf ebener, glatter Fahrbahn schaltet das Steuergerät 30 die Fahrwerkslager 24 z. B. auf die Kennlinie 1 bzw. auf kleine Steifigkeit und kleine Dämpfung. Abhängig von der Geschwindigkeit und der Fahrbahnbeschaffenheit werden dann nach entsprechender Signalauswertung im Steuergerät 30 die weiteren Kennlinien 2 bis 4 geschaltet.

Über eine Vorrangschaltung im Steuergerät 30 wird bei definierten Fahrzuständen des Kraftfahrzeuges, insbesondere bei einem schnellen Durchfahren von Kurven oder bei Bremsvorgängen, unabhängig von der Fahrbahnbeschaffenheit und zur Erhöhung der Fahrsicherheit eines oder mehrere der Fahrwerkslager 24 auf die Kennlinie 3 oder 4 umgeschaltet.

Zur Erkennung dieser definierten Fahrzustände können das Bremssignal z.B. eines Bremslichtschalters, Geschwindigkeitssignale und deren Ableitungen, Signale des Drehzahlsensors 34, Signale eines Lenkwinkelsensors der Lenkung des Kraftfahrzeuges, etc. herangezogen werden. Solche Signale können beispielsweise für Steuergeräte von Antiblockiersystemen oder Fahrstabilitätssystemen (ABS und/oder ESP) im Kraftfahrzeug ohnehin vorhanden sein und mit verwendet werden.

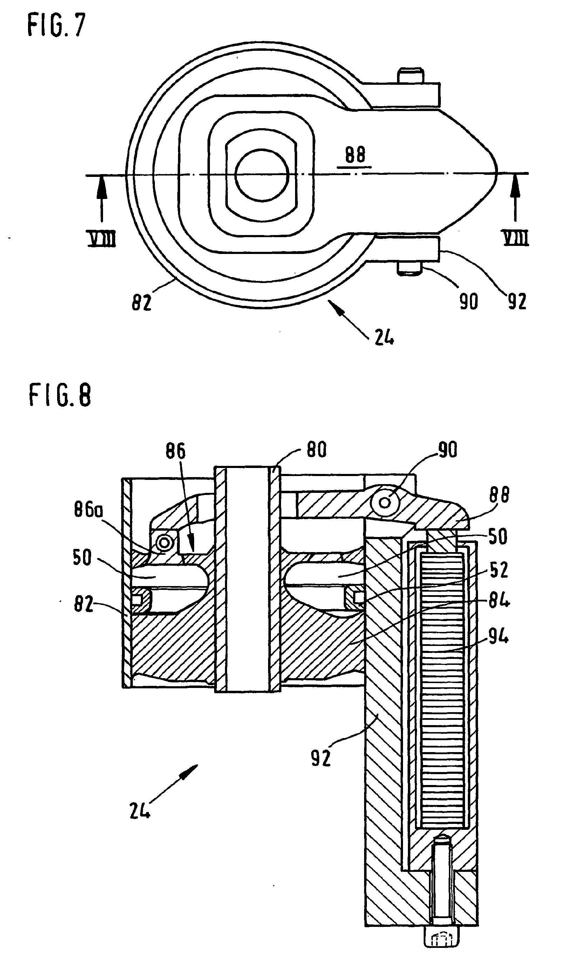

In den **Fig. 7 und 8** ist ein alternatives Fahrwerkslager 24' gezeigt. Funktionell gleiche Teile sind mit gleichen Bezugszeichen zu den Fig. 2 bis 4 versehen.

Das Fahrwerkslager 24' setzt sich im wesentlichen aus einer Innenhülse 80, einer Außenhülse 82 und einem dazwischen angeordneten, gummielastischen Tragkörper 84 zusammen.

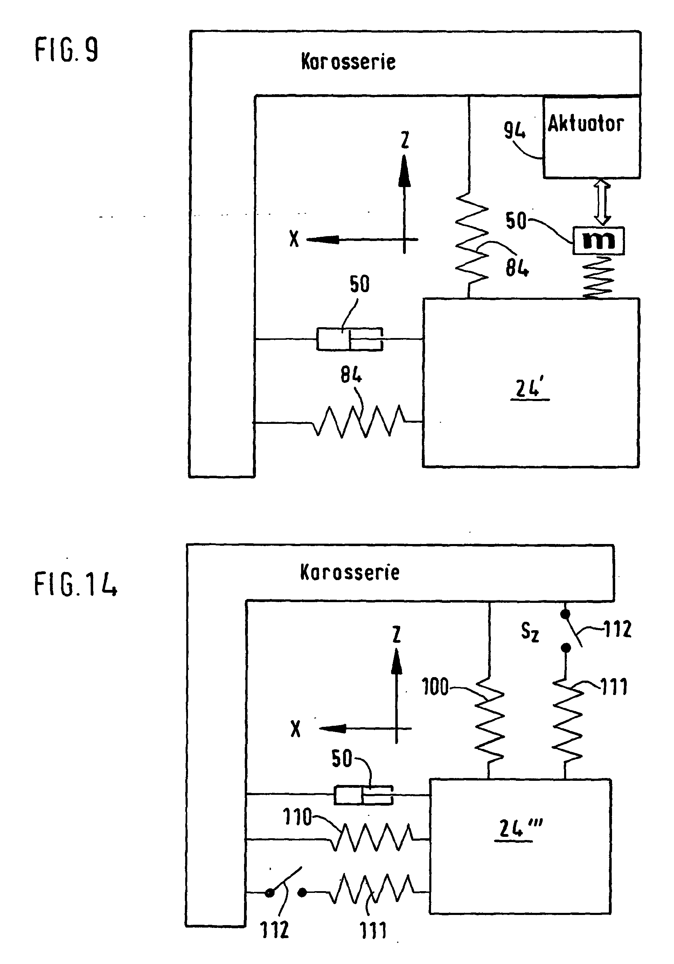

In dem Tragkörper 84 sind Arbeitskammern 50 in der X-Richtung diametral gegenüber liegend angeordnet, die mit Hydrauliköl befüllt und über den ringförmigen Drosselkanal 52 miteinander verbunden sind. Das Fahrwerkslager 24' wirkt somit in X-Richtung wie ein hydraulisch gedämpftes Lager mit bevorzugt einem Verlustwinkel von > 40 Grad, während es in der Y-Richtung lediglich als herkömmliches Gummi-Metall-Lager ausgelegt ist (vgl. auch Ersatzschaltbild **Fig. 9****,** mit den entsprechenden Bezugszeichen).

Die Arbeitskammern 50 sind durch eine obere Wand begrenzt, die eine in Z-Richtung nachgiebige Membrane 86 bildet.

An die Membrane 86 an einen entsprechenden, metallischen Ringeinsatz 86a ist ein doppelarmiger Hebel 88 angelenkt, der über eine Achse 90 an einem an die Außenhülse 82 angeformten Gehäuseabschnitt 92 schwenkbar gelagert ist.

Auf den kürzeren Arm des Hebels 88 wirkt ein Aktuator bzw. ein elektrisches Piezoelement 94, das sich in an sich bekannter Weise aus einer Vielzahl von Scheiben aus einer Piezokeramik zusammensetzt und über das bei entsprechender elektrischer Ansteuerung (nicht dargestellt) der Hebel 88 mit einem geringem Hub auslenkbar ist, wobei aufgrund der gewählten Hebelverhältnisse wie ersichtlich der Hub auf die Membrane 88 ca. 1:4 übersetzt ist.

Bei einer entsprechenden Ansteuerung des Aktuators 94 können in dem Fahrwerkslager 24' von der Membrane 86 initiierte Gegenschwingungen gesteuert werden, die akustisch störende, von der Fahrbahn angeregte Schwingungen in Z-Richtung löschen.

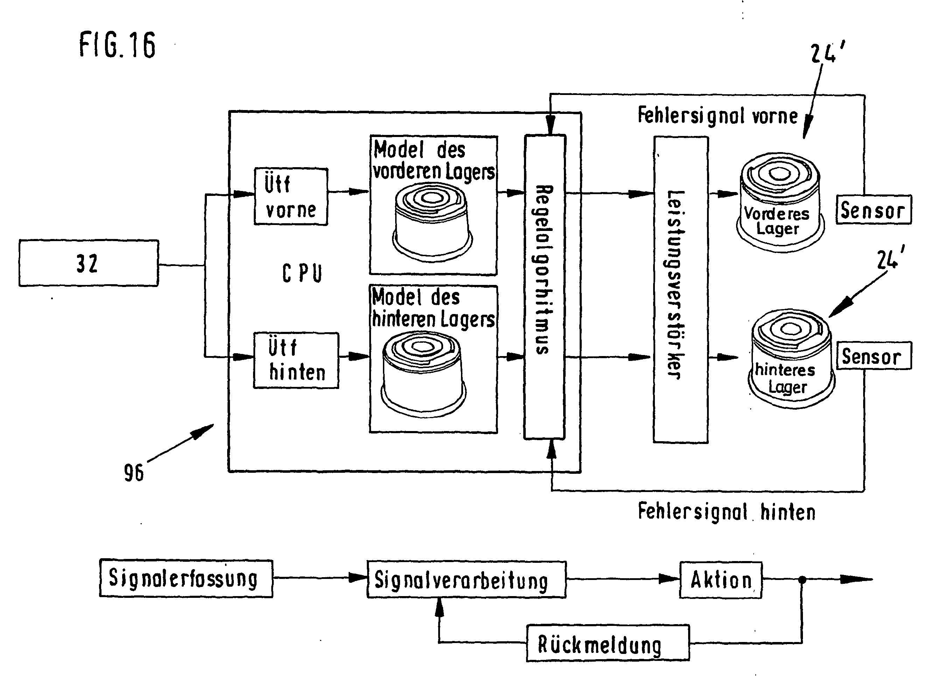

Die Ansteuerung des Fahrwerkslagers 24' erfolgt gemäß **Fig. 16** über ein elektronisches Steuergerät 96 folgender Auslegung:

Als Signalerfassung dienen Wegsensoren 32, mittels denen die Amplitude und Beschleunigung an den Querlenkern 16 bzw. an den Rädern des Kraftfahrzeuges signaltechnisch erfassbar sind.

Über die Übertragungsfunktion (Ütf) der Vorderachse 12 bzw. der Hinterachse 14 lässt sich daraus in dem Steuergerät 96 die Anregung der Fahrwerkslager 24' berechnen. In einem virtuellen Modell für das jeweilige Fahrwerkslager 24' wird die für die Schwingungskompensation erforderliche Gegenschwingung und die dafür nötige Ansteuerspannung errechnet. Die Ansteuerung des Aktuators bzw. Piezoelementes 94 erfolgt wie dargestellt über einen Leistungsverstärker.

Ferner wird die Beschleunigung an der Lageraußenhülse 82 (mit der Karosserie des Kraftfahrzeuges verbunden) oder am Gehäuseabschnitt 92 über nicht näher dargestellte Beschleunigungssensoren erfasst und in einer Rückkoppelungssteuerung als Fehlersignal in das Steuergerät 96 zurückgeführt.

Durch einen Regelalgorithmus im Steuergerät 96 wird sodann die Ansteuerung der Fahrwerkslager 24' auf eine minimale Beschleunigung modifiziert. Da die Fahrwerkslager 24' in der Regel unterschiedlich von der Fahrbahn angeregt werden, ist eine individuelle Ansteuerung wie in der **Fig. 16** dargestellt vorzuziehen.

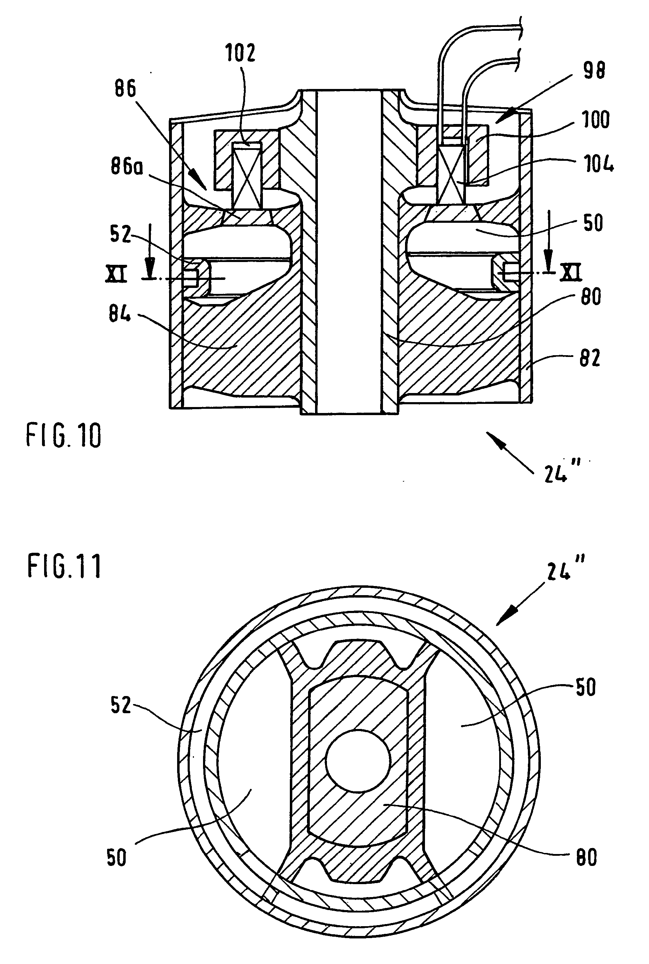

In den **Fig. 10 und 11** ist ein weiteres Fahrwerkslager 24" dargestellt, das nur soweit beschrieben ist, als es sich von dem Fahrwerkslager 24' gemäß den Fig. 7 und 8 unterscheidet. Funktionell gleiche Teile sind mit gleichen Bezugszeichen versehen.

Dabei wird die die Arbeitskammern 50 begrenzende Membrane 86 mit dem metallischen Ringeinsatz 86a von z. B. einem elektrodynamischen Stellantrieb 98 in Gegenschwingungen versetzt. Der Stellantrieb 98 setzt sich aus einem ringförmigen Permanentmagnet 100 und eine in einen entsprechenden Ringkanal 102 des Permanentmagnetes 100 einragende Tauchspule 104 zusammen, wobei die Tauchspule 104 über elektrische Leitungen mit dem entsprechenden Steuergerät (z.B. gemäß **Fig.16****)** verbunden ist.

Wie ersichtlich ist, ist der Permanentmagnet 100 fest mit der Innenhülse 80 des Fahrwerkslagers 24" verbunden, während die Tauchspule 104 bei entsprechender Strombeaufschlagung zur Erzeugung der Gegenschwingungen frei schwingend auf die Membrane 86 wirkt. Das dadurch schwingend angeregte Hydrauliköl in den Arbeitskammern 50 wirkt wiederum wie die Tilgermasse m (vgl. **Fig. 9**).

Der Arbeitsbereich dieses Stellantriebs 98 liegt in einem bestimmten Frequenzband von z.B. 10 bis 70 Hz. Dabei können Amplituden von ca. 0,2 mm zurückgelegt werden. Damit kann wahrnehmbaren Schwingungen in Z-Richtung wie z.B. Dröhngeräuschen wirksam entgegengewirkt werden. Die Ansteuerung des Stellantriebs 98 erfolgt nach dem selben Regelprinzip, wie es anhand der **Fig. 16** erläutert ist.

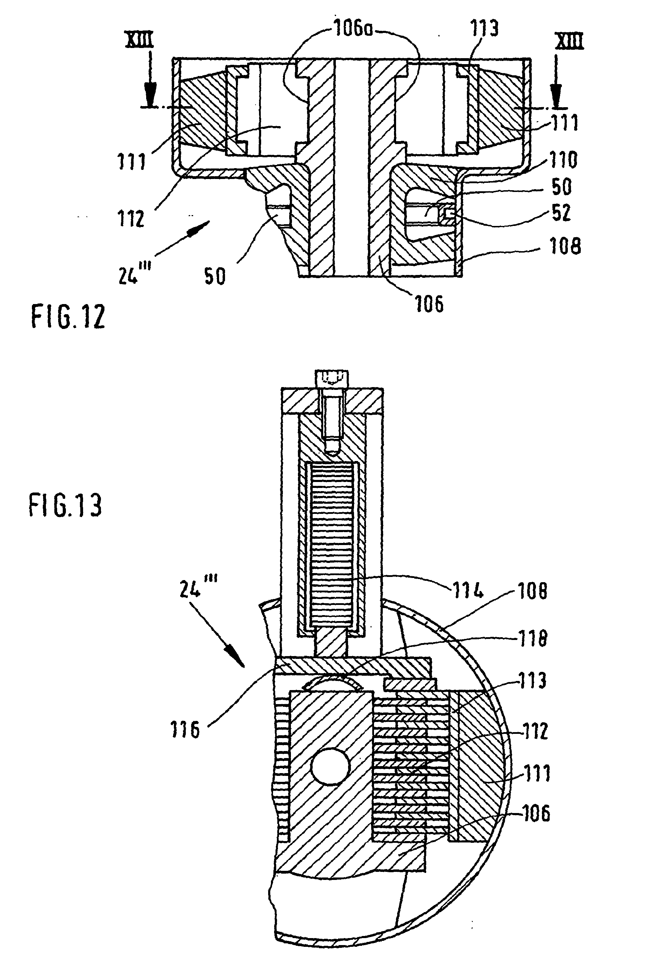

Die **Fig. 12 und 13** zeigen ein weiteres Fahrwerkslager 24''', das wiederum nur insoweit beschrieben ist, als es sich von den vorbeschriebenen Fahrwerkslagern 24 unterscheidet. Funktionell gleiche Teile sind mit gleichen Bezugszeichen versehen. Die linksseitig der Zeichnung teilweise nicht dargestellten Abschnitte des Fahrwerkslagers 24"' sind sich spiegelbildlich gleich den rechtseitigen Abschnitten vorzustellen.

Das Fahrwerkslager 24"' weist eine Innenhülse 106, eine im Durchmesser gestufte Außenhülse 108 und einen Tragkörper 110 auf. In dem Tragkörper 110 sind in der X-Richtung diametral gegenüber liegende Arbeitskammern 50 ausgebildet, die wie in den vorstehenden Fahrwerkslagern 24 mittels eines ringförmigen Drosselkanals 52 strömungstechnisch miteinander verbunden sind.

Ferner weist das Fahrwerkslager 24"' eine Zusatzfeder in Form von zwei ebenfalls in X-Richtung gegenüber liegenden, gummielastischen Puffern 111 auf, die radial außen an der Außenhülse 108 anliegen und radial nach innen ragende, in einem Rahmen 113 befestigte Kupplungslamellen tragen, die mit alternierend angeordneten Kupplungslamellen auf der Innenhülse 106 eine Lamellenkupplung 112 bilden.

Die mit der Innenhülse 106 zusammen wirkenden Kupplungslamellen sitzen auf in X-Richtung formschlüssig, in Y-Richtung aber verschiebbaren Schlüsselflächen 106a der Innenhülse 106, so dass sie in Y-Richtung sowohl bei geöffneter als auch bei geschlossener Lamellenkupplung 112 einen Bewegungs-Freiheitsgrad aufweisen.

Die Lamellenkupplung 112 kann über ein elektrisches Piezoelement 114 als Aktuator geschlossen werden, wobei ein Stößel des quer zur Mittelachse der Innenhülse an die Außenhülse 108 angebauten Piezoelementes 114 auf eine Druckplatte 116 und eine Vorspannfeder 118 wirkt.

Im stromlosen Zustand ist die Lamellenkupplung 112 geöffnet und somit die Zusatzfeder bzw. die gummielastischen Puffer 111 wirkungslos. Die Steifigkeit des Fahrwerkslagers 24"' ist nur durch die Tragfeder 110 und die hydraulische Dämpfung durch die Wirkung der Arbeitskammern 50 und den Drosselkanal 52 bestimmt.

Wird der Aktuator bzw. das Piezoelement 114 strombeaufschlagt, so wird über die Druckplatte 116 und die Vorspannfeder 118 die Lamellenkupplung 112 geschlossen, wodurch über die besagten Kupplungslamellen die Puffer 111 fest mit der Innenhülse 106 in der Z- und X-Richtung verbunden sind. Damit erhöht sich die Steifigkeit des Fahrwerkslagers 24"' entsprechend; es werden die Tragfeder 110 und die Zusatzfeder 111 parallel ausgelenkt.

Es können somit zwei Kennlinien geschaltet werden, nämlich bei im wesentlichen gleicher Dämpfungswirkung eine kleine und eine große Steifigkeit des Fahrwerkslagers 24"'. Dies zeigt auch das Ersatzschaltbild gemäß **Fig. 14** des Fahrwerkslagers 24"', wobei wiederum gleiche Bezugszeichen verwendet sind und die Lamellenkupplung 112 als Schalter dargestellt ist.

Die Ansteuerung des Fahrwerkslagers 24"' ist relativ einfach, da als Ausgangsgröße nur die Entscheidung - ob das Fahrwerklager 24"' geschaltet wird - erforderlich ist. Es werden die gleichen Sensorsignale genutzt, wie dies anhand der **Fig. 2 bis 4** bzw. zur **Fig. 15** erläutert ist.

Allerdings ist für die Ansteuerung der Piezoelemente 114 ein Leistungsverstärker erforderlich, der Hochspannung zur Verfügung stellt. Trotz des hohen Spannungsbedarfs ist der Energieverbrauch jedoch relativ gering, da die Piezoelemente nur bei Längenänderung (d.h. wenn die Steifigkeit entweder zu- oder abgeschaltet wird) elektrische Leistung aufnehmen. Da nur zwischen zwei Zuständen umgeschaltet werden muss, werden keine großen Anforderungen hinsichtlich Genauigkeit und Dynamik an den Leistungsverstärker gestellt.

Die Erfindung ist nicht auf die beschriebenen Ausführungsbeispiele beschränkt. Es sind im Rahmen des Offenbarten auch andere Kombinationen der beschriebenen Ausführungen denkbar, die sich für den Fachmann ableiten lassen, insbesondere in der Anordnung der Fahrwerkslager und der Wirksamkeit der Steifigkeiten und Dämpfungseigenschaften in den besagten Z-, X- und Y-Richtungen.

## Patentansprüche

1. Verfahren zur Schwingungsdämpfung an Fahrwerkslagern von Kraftfahrzeugen, wobei der Fahrzustand des Kraftfahrzeuges und/oder die Fahrbahnbeschaffenheit über Sensoren erfasst wird und wobei das zumindest eine Fahrwerkslager (22, 24, 29) zur Veränderung dessen Steifigkeit und/oder Dämpfung abhängig von den erfassten Parametern auf verschiedene Kennlinien verändert wird, **dadurch gekennzeichnet, dass** über an der Vorderachse (12) des Kraftfahrzeuges erfasste Fahrbahnzustände eine schnelle Änderung der Kennlinie zumindest eines Fahrwerklagers (24) an der Hinterachse (14) gesteuert wird.

2. Verfahren nach Anspruch 1, **dadurch gekennzeichnet, dass** das Fahrwerklager (22, 24, 29) auf unterschiedliche Kennlinien umgeschaltet wird.

3. Verfahren nach Anspruch 1 oder 2, **dadurch gekennzeichnet, dass** dem Fahrwerklager (22, 24, 29) abhängig von der Fahrbahnbeschaffenheit eine Gegenschwingung überlagert wird.

4. Verfahren nach einem der vorhergehenden Ansprüche, **dadurch gekennzeichnet, dass** bei definierten Fahrzuständen des Kraftfahrzeuges eine die Fahrsicherheit erhöhende Einstellung der Fahrwerklager (24) bevorrangt wird.

5. Verfahren nach einem der vorhergehenden Ansprüche, **dadurch gekennzeichnet, dass** bei mehreren Fahrwerklagern (24) mit Überlagerung einer Gegenschwingung die Fahrwerklager (24) getrennt und abhängig von deren spezifischer Schwingungsanregung von der Fahrbahn getrennt angesteuert werden.

## Claims

1. Method of damping vibrations at running gear mountings of motor vehicles in which the driven state of the motor vehicle and/or the nature of the carriageway are sensed by means of sensors and in which, to change the stiffness and/or damping of the at least one running gear mounting (22, 24, 29), the said at least one running gear mounting (22, 24, 29) is changed to various characteristics as a function of the parameters which are sensed, **characterised in that** a fast change of the characteristic of at least one running gear mounting (24) at the rear axle (14) is controlled by way of carriageway states which are sensed at the front axle (12) of the motor vehicle.

2. Method according to claim 1, **characterised in that** the running gear mounting (22, 24, 29) is changed over to different characteristics.

3. Method according to claim 1 or 2, **characterised in that,** as a function of the nature of the carriageway, the running gear mounting (22, 24, 29) has an opposing vibration superimposed on it.

4. Method according to one of the foregoing claims, **characterised in that**, when the motor vehicle is in defined driven states, preference is given to a setting of the running gear mountings (24) which increases the safety of driving.

5. Method according to one of the foregoing claims, **characterised in that,** when there are a plurality of running gear mountings (24) which have an opposing vibration superimposed on them, the running gear mountings (24) are operated separately and as a function of their specific vibratory excitation, independently of the carriageway.

## Revendications

1. Procédé pour amortir les vibrations au niveau de paliers de châssis de véhicules automobiles, l'état de marche du véhicule automobile et/ou la nature de la chaussée étant détectée par des capteurs et différentes caractéristiques de l'au moins un palier de châssis (22, 24, 29) étant modifiées pour modifier sa rigidité et/ou son amortissement en fonction des paramètres détectés, **caractérisé en ce qu'**une modification rapide de la caractéristique d'au moins un palier de châssis (24) au niveau de l'essieu arrière (14) est commandée par des états de chaussée détectés au niveau de l'essieu avant (12) du véhicule automobile.

2. Procédé selon la revendication 1, **caractérisé en ce que** différentes caractéristiques du palier de châssis (22, 24, 29) sont commutées.

3. Procédé selon la revendication 1 ou 2, **caractérisé en ce qu'**une contre-vibration est superposée au palier de châssis (22, 24, 29) en fonction de la nature de la chaussée.

4. Procédé selon l'une quelconque des revendications précédentes, **caractérisé en ce qu'**en cas d'états de marche définis du véhicule automobile, un réglage augmentant la sécurité de marche des paliers de châssis (24) est privilégié.

5. Procédé selon l'une quelconque des revendications précédentes, **caractérisé en ce qu'**en cas de plusieurs paliers de châssis (24) avec superposition d'une contre-vibration, les paliers de châssis (24) sont séparés et commandés en fonction de leur excitation de vibration spécifique séparément de la chaussée.
